# EUROPEAN PATENT SPECIFICATION

(11) **EP 3 455 605 B1**
(45) Date of publication and mention of the grant of the patent: **31.12.2025**
(21) Application number: 17724873.9
(22) Date of filing: 09.05.2017
(51) Int. Cl.: G01N 1/40, G01N 35/00

(54) **A SAMPLING APPARATUS**
PROBENAHMEVORRICHTUNG
APPAREIL D'ÉCHANTILLONNAGE

(30) Priority: 09.05.2016 GB 201608088
(43) Date of publication of application: 20.03.2019
(73) Proprietor: Markes International Limited, Rhondda Cynon Taff CF72 8XL (GB)
(72) Inventor: COLE, Martyn Rhys, Llantrisant Rhondda Cynon Taff CF72 8XL (GB); MARTIN, Helen Jennifer, Llantrisant Rhondda Cynon Taff CF72 8XL (GB)
(74) Representative: Murgitroyd & Company
(86) International application number: PCT/GB2017/051285
(87) International publication number: WO 2017/194927

(56) References cited:
- US-A1- 2003 233 893
- US-A1- 2010 313 688
- US-A1- 2015 276 780

## Description

The present invention relates to a sampling apparatus, and in particular an apparatus for the automated sampling and analysis of liquid and gaseous samples.

Sampling and analysis techniques are commonly utilised for the analysis of a liquid to identify components within the liquid. Examples include the identification of pollutants in drinking water, fragrance allergens in cosmetics or flavour profiling of beverages. The analysis of low-level organic compounds in aqueous matrices presents significant challenges for performance of rapid, sensitive and automated analysis. Analysis of such samples is usually performed after extraction and enrichment steps, often involving liquid-liquid extraction (LLE) or solid phase extraction (SPE).

Solid phase extraction may be achieved, for example, using Polydimethylsiloxane (PDMS). PDMS extraction is based on adsorption, an equilibrium technique based on the partitioning of analytes between the silicone and the aqueous phases. A sorptive material is placed into a liquid sample, and the sorptive material absorbs the compound of interest contained therein. The quantity of analyte extracted is proportional to its concentration in the sample, providing equilibrium is reached. The amount of analyte extracted is also dependant on the size and hence maximum absorption volume of the analyte material. The extraction into the PDMS can be estimated based on the octanol-water partition coefficient of the analyte (K O/W). The ratio of the PDMS to the sample, known as the phase ratio, becomes an important factor in analyte recovery. The extraction efficiency depends on the mass of solid phase.

PDMS may be used in Solid Phase MicroExtraction (SPME), a known solid phase extraction sampling technique for extracting organic compounds from sample. SPME involves the use of a fibre coated with a thin layer of sorptive material, such as PDMS, that forms the extracting phase. The sorptive material may be a solid sorbent selected to extract varying types of analytes from a range of sample media, including both liquid and gas phase. SPME has found widespread use as it is easily automated.

The size of the fibre, coated with the sorbent enables it to be housed within the body of needle used to pierce the sample vial. Once the needle has been inserted into the vial the fibre is extended out of the needle and introduced into the sample matrix. The needle is then removed and the sample held on the fibre is subsequently desorbed for analysis in a Gas Chromatograph.

However the necessity to fit within a needle, limits SPME to a very thin layer of PDMS (~7-100 Cm). Accordingly the total volume of the recovered compounds is limited, typically in the order of 0.5 CL with K O/W values below 1000 (log K O/W 3). The disadvantage with SPME is therefore a limitation in the amount of adsorbent that can be loaded onto a fibre.

Solid phase extraction techniques are commonly used to sample mixtures of compounds that may be subject to a change in composition due to loss of one or more constituents. Such mixtures are required to be sealed prior to analysis in order that the measurement of the composition accurately reflects the original material. Typically a septa or seal comprising a polymeric film caps and seals the sample vessel. The seal is intended to be able to be penetrated by a sample probe but pliable enough to reseal the hole created when the sample probe is removed.

To address the low capacity limitations of SPME sampling, higher capacity sorptive extraction samplers have been developed. One such high capacity sampler includes metal probes having a sleeve of PDMS material provided around the probe. However, whereas SPME typically uses relatively fine needles, the dimensions of the metal probes required to support necessary quantity of PDMS for high capacity sampling has been found to present significant problems in the penetration and resealing of vessel seals, which to date has limited the degree of automation possible in high capacity sampling.

Higher capacity sampling has therefore been restricted to non-automated methods in which the probe, in the form of a rod or bar coated with extraction media, is added directly to the sample. The vial is then sealed manually. Following extraction the seal is then manually removed and the probe recovered manually for further analysis. As well as being slow and laborious, this method risks contamination of the atmosphere, the sample and/or adjacent samples during the process of removing the seal, removing the probe, and resealing the vessel.

US patent numbers US2015/276780 and US2003/233893 describe sampling apparatus that may be useful for understanding the invention. US2015/276780 discloses a system in which an actuator connects to sample probe via a transport adaptor at the head of the sample probe. A complex sealing arrangement is provided between the sample probe and the sample container to maintain a seal when the sample container is lifted by the collector. The actuator is configured to connect only to the sample probe via the transport adaptor. The actuator may lift the sample container but only by connecting to the probe sealed to the container. Therefore, sample containers cannot be independently moved without a separate dedicated actuator.

It is therefore desirable to provide an improved sampling apparatus and/or method of sampling which addresses the above described problems and/or which offers improvements generally.

According to the present invention there is provided a sampling apparatus as described in the accompanying claims.

In an embodiment of the invention there is provided a sampling apparatus for sorptive sampling comprising a sample vessel, a sample probe and an actuator. The sample vessel is arranged for containing a liquid to be sampled. The sample probe has a probe section configured to be inserted into the sample vessel, the probe section including a sorbent material arranged to acquire analytes from the sample vessel. The actuator comprises a sample probe adaptor, and the actuator is configured to connect to and manipulate both the sample vessel and the sample probe independently via the sample probe adaptor. The sample probe and sample vessel are detachably connectable to the actuator via the sample probe adaptor such that the actuator is able to connect to and detach from the sample probe and sample vessel in use to selectively interchange the sample probe connected to the actuator with a further sample probe. The actuator may also connect to the sample probe and the sample vessel simultaneously via the sample probe adaptor to manipulate the sample probe and the sample vessel together when the sample probe is received within the sample vessel.

The actuator is any device suitable for moving the sample probes in multiple axes, such as a robotic arm which is movable in the x,y,z axes and which may include one or more linear actuators provided thereon. In an alternative embodiment the sample probe may be a non-sorptive sampling probe configured to sample from the vessel in an alternative manner.

In standard arrangements of the prior art an actuator for automated sampling will include either a dedicated headspace tool for headspace analysis, or a dedicated sample probe tool. In the case of a sample probe, the probe is connected to a sample probe tool prior to an automated sampling process, which in turn is connected to the robotic arm. The sampling process is then run. If further sampling is required using a different sample probe then the sample probe must be disconnected from the sample probe tool by the operator and a replacement re-connected to the sample probe tool and consequently the actuator. Similarly if an alternative sampling process is required, for example headspace sampling, then the headspace tool must be exchanged with the sample probe tool. This requirement to manually disconnect the sampling probe limits the sampling process as the robotic arm must remain with the same sample probe through entire sampling run. If multiple vessels are to be sampled the actuator must remain with the sample probe through the required sampling period for each vessel.

Providing a sample probe that is detachably connectable to the actuator enables the actuator to collect a sample probe, transport the probe to a sample vessel, and then detach from the sample probe once deposited in the vessel and collect a further probe for sampling a further vessel. The detachability of the probe frees up the operation time of the actuator enabling multiple simultaneous samples, and cutting the overall time of a sampling run significantly. In addition, the ability to simultaneously connect to the sample vessel and the probe allows the sample vessel and sample probe, when the sample probe is inserted in the vessel, to be lifted by the sample vessel rather than being lifted directly by the sample probe. This advantageously obviates the requirement for a robust and complex sealing arrangement on the vessel that is able to grip the probe as well as seal against it, as would be required if the vessel and probe were to be lifted directly by the probe.

The actuator may comprises a robotic arm. The actuator is a preferably a three axis robotic arm, providing maximum flexibility for transporting the sample probes.

The actuator may include a releasable connector and the sample probe may comprise a corresponding connector portion that is shaped to be detachably held by the releasable connector. The releasable connector may be a releasable gripper, for example but not limited to a spring loaded catch such as a ball catch, and the sample probe comprises a connector portion that is shaped to be detachably engaged by the gripper. The term 'releasable connector' may refer to a standard spring loaded grip mechanism of a 3-axis actuator, but may mean any connector element that is able to grip, clamp or otherwise mechanically connect to another element in an automatically releasable manner.

The releasable connector may be a connector provided directly on the robotic arm, or may be a separate connector actuated by the robotic arm. The releasable connector may be a gripper tool having movable grip elements that open and close to selectively release or grip the sample probe, the grip elements being actuated by the robotic arm. Where such a gripper tool is used, the term "actuator" is intended to describe both the robotic arm and the gripper tool connected thereto in combination, with the robotic arm connecting to the sample probe via the gripper tool.

The sampling apparatus further comprises a sample probe adaptor. The sample probe adaptor may include a first connector configured for releasable connection to the actuator and a second connector configured to releasably connect to the sample vessel when the sample probe adaptor is connected to the actuator to enable the actuator to connect to and manipulate both the sample probe and the sample vessel. The adaptor is therefore an intermediate component that adapts a standard actuator and it is the adaptor which 'configures' the actuator to connect to and manipulate both the sample vessel and the sample probe independently. The adaptor enables a sample probe to be inserted into a sample vessel and the vessel and probe to be moved together. In addition, the sample probe and vessel may be moved independently.

The sample probe adaptor may include a connector for connecting the actuator to the sample probe.

The sample vessel preferably includes a metallic cap and the second connector of the sample probe adaptor comprises a magnetic element configured to magnetically secure to the metallic cap of the sample vessel to move the vessel. This obviates the requirement for any complex mechanical connection mechanism.

The actuator preferably includes first and second vertical actuators, the first connector of the sample probe adaptor being arranged to connect to the first vertical actuator and the sample probe including a connection element configured to connect to the second vertical actuator.

The sample probe adaptor is configured to permit vertical movement of the second vertical actuator relative to the sample probe adaptor when it is connected to the first vertical actuator. The second vertical actuator includes a release mechanism arranged to release the sample probe from the second vertical actuator. The sample probe adaptor includes a stop element configured to engage with the release mechanism when the second vertical actuator moves relative to the sample probe adaptor to operate the release mechanism and cause it to release the sample probe.

The sample vessel preferably includes a sampling axis along which the sample probe is inserted into the sample vessel, and the sample probe adaptor includes a sampling axis that aligns with the sampling axis of the sample vessel when the sample vessel connects to the second connector of the sample probe adaptor, the first connector of the sample probe adaptor is spaced from the sample axis such that when the first connector is connected to the first vertical actuator the second vertical actuator is axially aligned with the sampling axis. The second vertical actuator is used to connect to and operate the sample probe, and therefore alignment of the second actuator with the sampling axis ensures the sample probe is axially aligned with the sampling axis of the vessel for insertion.

The body of the sample probe adaptor may be configured such that when the first connector of the sample probe adaptor is connected to the first vertical actuator the body of the sample probe adaptor is spaced from the sampling axis to enable the sample probe to be vertically actuated along the sampling axis without interference with the body of the sample probe adaptor. While the probe adaptor is connected to the vessel, the body is configured such that free access to the top of the vessel is provided. This may be in the form of a cut away section, recess, aperture or any other configurations that ensures that the sampling axis is unobstructed above the sampling vessel when connected to the sample probe adaptor.

The sample probe adaptor and the actuator may be arranged such that when the first connector is connected to the first vertical actuator and the second connector is secured to the sample vessel, the second vertical actuator is able to vertically actuate a sample probe independently of the sample vessel. In this way the sample vessel may be held stationary by the probe adaptor while the second vertical actuator inserts or withdraws the sample probe from the sample vessel.

Preferably the sample probe adaptor includes an aperture extending therethrough along the sampling axis, and the stop element is arranged at least partially around the periphery of the aperture at the upper surface of the adaptor to engage the release mechanism as the second vertical actuator moves downwardly through the aperture to a release position. Preferably when the sample probe adaptor is connected to the first actuator at least part of the release mechanism is spaced radially outwards of the aperture, and the second actuator operates across a first range of vertical movement in which the release mechanism remains vertically spaced above the stop element and is movable below the lower limit of the first range of movement to a release position in which at least part of the release mechanism spaced radially outwards of the aperture engages with the stop element.

The second actuator may include a lower part that extends through the aperture of the adaptor in use. At least part of the release mechanism is spaced radially outwards of the lower part. The lower part operates across a first range of vertical movement during sampling across which the release mechanism remains vertically spaced above the stop element. The lower part also extends below the first range of movement to a release position and the release mechanism is arranged to engage with the stop element surrounding the aperture and the lower part extends through the aperture to the release position.

The stop member may comprise an upstanding wall extending around at least part of the aperture, the wall having an upper surface arranged to engage the release mechanism. The release mechanism may be a vertically slidable mechanism such as a slidable collar that causes lateral release of catch upon upward actuation relative to the catch, which may be a ball bearing catch or similar arrangement.

The sampling apparatus preferably also includes an alignment element that engages the sample probe when it is received in the sample vessel to vertically align the probe to enable it to be connected to by the second vertical actuator. The sample probe is supported within the vessel by the flexible septum. In use, although the sample probe is inserted into the vessel in a completely vertical orientation, it may begin lean away from the vertical axis over time, particularly during agitation. If the sample probe is not aligned with the vertical axis it is difficult for the actuator, which operates in the vertical axis, top re-acquire the sample probe.

The alignment element may comprise a first and second alignment elements that are movable in horizontally opposing directions to move into engagement with opposing sides of the sample probe. The alignment elements are movable between an alignment position in which they engage the sample probe to hold it in a substantially vertical orientation, and a release position in which the sample probe and the sample vessel are able to be lifted vertically.

Preferably each alignment element includes a guide section arranged to receive part of the sample probe, the guide sections aligning in the alignment position to hold the sample probe vertically. The alignment elements may comprise horizontally arranged alignment plates, each having a main aperture formed therein with a diameter greater than the diameter of the sample vessel and a guide channel extending into the plate from the periphery of the main aperture. The main apertures align in the release position to define a channel through which the sample vessel is able to be vertically moved unhindered. In the alignment position the guide channels align and cooperate to define a substantially circular aperture corresponding to the diameter of the shaft of the sample probe, the circular aperture being concentrically aligned with the vertical axis of the probe.

The sampling apparatus may further comprise a latching mechanism to hold and vertically restrain the sample probe in a fixed vertical position, for example when the sample probe is inserted in an oven. The latching apparatus preferably includes a single or a pair of latching plates each including a guide section arranged to receive part of the sample probe, the guide plates aligning in the latching position to vertically lock the sample probe in position. The guide sections are preferably arranged to engage the connector channel of the sample probe head to which the actuator attaches. The latching plates are preferably horizontally arranged alignment plates, each having a main aperture formed therein with a diameter greater than the diameter of the sample vessel and a guide channel extending into the plate from the periphery of the main aperture. The main apertures align in a release position to define a channel through which the sample vessel is able to be vertically moved unhindered. In the locked position the guide channels align and cooperate to define a substantially circular aperture corresponding to the diameter of the connector channel of the sample probe head, with which the plates are vertically aligned.

The sample probe adaptor may include a gripper mechanism configured to grip the sample probe. The gripper provides a releasable connection between the actuator and the sample probe. The gripper mechanism includes a connection element configured to connect to the second vertical actuator to enable the gripper mechanism to be operated by the second vertical actuator. Specifically, operation of the second vertical actuator connected to the gripper mechanism causes the gripper mechanism to close and open to grip and release the sample probe. The gripper mechanism functions as a connector for the actuator to connect the actuator to the sample probe. The actuator is preferably a robotic arm, and the gripper mechanism advantageously allows the robotic arm to releasably connect to the sample without the sample probe connecting directly to the connector of the robotic arm. Thus, wear to the connector of the robotic arm through the continued connection and release of sample probes is avoided.

The at least one magnet of the sample probe adaptor may be provided on the gripper mechanism. Preferably the gripper mechanism includes at least two movable gripper elements in the form of opposing fingers. The at least one magnet is provided on the distal end face of at least one of the gripped elements, the distal end being the end facing the sample vessel in use. Preferably at least one magnet is provided on the distal end of each gripper element.

A cleaning device is disclosed for use in a sampling system such as described above. The cleaning device is not in accordance with the invention as described in the accompanying claims. The cleaning device is a wash station comprising a chamber configured to receive at least part of an elongate sorbent sample probe, one or more liquid inlets configured to direct a flow of cleaning liquid into the chamber to clean the sample probe and one or more air inlets arranged to direct a flow of air into the chamber to dry the sample probe. The cleaning station permits the automated washing of sample probes, to remove debris or other contaminants prior to desorption without the requirement for removing the sample probe from the actuator to perform a manual wash, thereby disrupting the automated sampling process.

The chamber preferably includes an opening into which the sample probe is inserted and the at least one liquid inlet is located proximate the opening for directing a cleaning solution into the probe.

The at least one liquid inlet may be arranged to direct the flow of cleaning liquid in a longitudinally inwards direction towards the inner end of the chamber. This ensures that the cleaning solution is contained within the chamber in use.

The chamber preferably includes a longitudinal axis along which the sample probe extends when received therein and the device includes a plurality of liquid inlets arranged in an annular array that is coaxial with the longitudinal axis of the chamber such that the liquid flow from each liquid inlet is directed radially inwards. As such a curtain of cleaning solution may be generated that provide 360 degree cleaning around the probe.

The chamber may further include a plurality of air inlets arranged in an annular array that is coaxial with the longitudinal axis of the chamber such that the air flow from each air inlet is directed radially inwards. The air inlets enable drying of the probe following the wash stage, to ensure no liquid is retained on the sample probe when it is transferred to the probe oven.

The plurality of air inlets may be longitudinally aligned with the plurality of liquid inlets and arranged in a common annular array therewith. This provides a compact arrangement in which all of the air and water connections are co-located, with the location near the opening allowing cleaning on entry and drying on retraction.

The liquid inlets and/or the air inlets may include nozzles located at their inner ends to create a jet of liquid and/or air that is directed into the chamber.

The air inlets are preferably arranged to create a radially directed air curtain.

The cleaning device may further comprise a controller arranged to commence a wash cycle by supplying cleaning liquid to the liquid inlets, and following the wash cycle commence a drying cycle by supplying pressurised air to the air inlets.

The chamber may further comprise a drain arranged at the inner end of the chamber for removing cleaning liquid therefrom that has been directed downwardly from the liquid inlets.

A sample vessel is disclosed comprising a liquid container having an opening at one end and a sealing member covering and at least partially closing said opening, and a plug element configured to extend through an aperture formed in the sealing member, the plug element including a tip having a first diameter locking section and a sealing section located along the plug element towards the proximal end having a diameter smaller than the locking tip which in use seals with the aperture formed in the sealing element while the larger diameter locking tip inhibits retraction of the plug. The plug element preferably includes a cap section including a metallic portion that is able to be secured to by the magnetic connector of the probe adaptor to enable the plug element and the sealed vessel to be transported by the actuator. The sealing element is a septum and may include a preformed aperture for receiving the sample probe and/or sealing plug element. Alternatively the septum may be configured to be pierced by the sample probe on entry with the plug element sealing the holes created by the probe. The sample vessel is not in accordance with the invention as described in the accompanying claims but is suitable for use therewith.

An elongate sample probe and an oven for heating a sample collected by the sample probe are disclosed. The oven is not in accordance with the invention as described in the accompanying claims. The oven comprises a heated chamber and an opening to the heated chamber, the opening having a diameter configured to receive the elongate sample probe and a sealing element located proximate the opening for sealing about a sealing portion of the sample probe to create a seal between the oven chamber and the external atmosphere. There is further provided an oven adaptor including a body having a sealing portion having the same shape and size as the sealing portion of the sample probe such that it is able to seal within the opening of the oven in the same manner as the probe. The adaptor includes an inner channel for connection to the oven chamber. A sealing element is provided which closes the channel and is formed of a material that is able to be pierced by a syringe in a sealing manner. The sealing element is preferably a septum formed of a resilient flexible material such as silicone. Without such an adaptor, the inlet would have to be manually configured depending on sampling method.

The sampling assembly may including one or more locking elements arranged to hold the sample probe in position within the sample oven and/or within the sample vessel when said vessel is located within an agitator. The locking element is arranged to engage the sample probe when it is inserted within the sample oven and or sample vessel to prevent vertical movement of the sample probe. This enables the sample probe to be disengaged by the robotic arm and left within the sample oven or sample vessel. In the case f the oven this enables the sample probe to be left in-situ without the risk of blow-out of the sample probe due to the pressure of the chamber. In the case of the agitator it prevents the sample probe from toppling while the vessel is agitated. The locking element is preferably a latching device that is arranged to engage the sample probe in the horizontal direction to prevent vertical movement. By vertically locking the sample probe the latching device enables the robotic arm to disengage with the sample probe and perform other functions

An automated sampling system is disclosed that is not in accordance with the invention as described in the accompanying claims. The sampling system comprising a sample vessel for containing a liquid to be sampled; a sample probe having a probe section configured to be inserted into the sample vessel, the probe section including a sorbent material arranged to acquire analytes from the sample vessel; and an actuator configured to connect to and manipulate both the sample vessel and the sample probe independently. The system further comprises an oven for heating the sample collected on the probe, a focussing cold trap for receiving the sample from the oven, means for releasing the sample from the cold trap and directing at least part of the sample to an analyser. An autosampler is provide that is arranged to receive at least part of the released sample. The autosampler including a plurality of collection tubes for receiving and storing at least part of the released sample.

Preferably the autosampler also includes a release oven for desorbing the re-collected sample for further analysis. The re-released sample is directed in a reverse direction back to the cold trap, from where it may be sent to one or more of the analyser, the same collection on the same autosampler, a different tube on the same autosampler and/or a tube on a further autosampler. Fluid connectors are provided which link the autosampler to the cold trap, the cold trap to the analyser, and the cold trap to the original sampling oven.

The original sampling oven may be used to release samples from a sample probe, a headspace syringe and/or a liquid sampler such as a liquid syringe. Each of these samples may be re-collected for archive or reanalysis on separate collection tubes in the autosampler and/or superimposed on the same collection tube for simultaneous analysis.

The sample probe is detachably connectable to the actuator such that the actuator is able to connect to and detach from the sample probe in use to selectively interchange the sample probe connected to the actuator with a further sample probe.

The sample probe may include a first diameter portion at its distal end which in use is at least partially received within the liquid sample and a second larger diameter section located towards the proximal end. The sample vessel includes a sealing member closing and sealing the vessel having an aperture formed therein with a diameter greater than the first diameter of the sample probe and smaller than the larger diameter of the sample probe such the first probe section is freely received through the aperture while the second section engages and seals with the aperture. The sealing member may include a first resilient membrane and a secondary membrane formed of PTFE that initially closes the aperture. The PTFE membrane layer may be separate from or bonded to the sealing member.

A sorptive sampling apparatus is disclosed that is not in accordance with the invention as described in the accompanying claims. The sampling apparatus comprises a sample vessel for containing a sample, the sample vessel having an opening and a seal assembly covering and sealing the opening, the seal assembly including a first sealing membrane and a second flexible sealing element. A sample probe having an elongate body including a sorbent material is also provided that is configured for insertion into the sample vessel, the elongate body having a lower section including said sorbent material, and an upper section having a diameter greater than the lower section. The flexible sealing element includes a preformed aperture for receiving the sample probe, the preformed aperture having a diameter that is less than the diameter of the upper section of the sample probe, the first sealing membrane being arranged to close and seal the vessel prior to sampling and to be pierced by the sample probe on insertion into the vessel, and the second flexible membrane being arranged to close and seal the vessel when the sample probe is inserted into the vessel such that the larger diameter upper section is received within the aperture. The performed aperture allows the lower section of the probe including the sorbent material to be easily inserted into the vessel through the sealing assembly without excessive frictional contact and prevents damage to the sorbent material that may occur if the probe were to pierce a flexible sealing element (septum) not having such a preformed aperture. Once interested the interference fit between the upper section of the probe and the aperture seals the vessel. However, prior to insertion of the probe the flexible septum is not able to seal the vessel due to the aperture. The sealing membrane is therefore arranged to seal the vessel prior to insertion of the probe, the membrane being arranged to be pierced on insertion.

Preferably the first sealing membrane is a thin film such a PTFE membrane. The first sealing membrane is preferably a disc shaped membrane corresponding to the size of the opening. The second sealing element is preferably formed of a flexible, elastic material such as silicone. The second sealing element preferably has a substantially annular shape.

The first membrane seal is located over the opening of the vessel between the vessel and the second flexible sealing element. The PTFE seal is therefore sandwiched between the vessel and the septum. As the PTFE membrane is pierced it bends away from the septum into the vessel and does not interfere with the seal between the probe and the septum.

A cap may also be provided that is arranged to secure the sealing assembly on the vessel, the sealing assembly being secured between the cap and the vessel, and the cap including an opening having a diameter greater than the aperture of the second flexible sealing element. In this way the cap does not hinder insertion of the probe, which passes through the opening in the cap. Also, as the opening is radially spaced outwardly of the aperture of the septum it exposes a region of the septum that is able to be used for syringe based sampling such as head space or liquid sampling.

The diameter of the aperture of the second sealing element is preferably greater than the diameter of the lower section of the sample probe, which ensures the lower section passes smoothly through the aperture while the upper section engages and seals therewith.

The sample probe may include a radially tapering section arranged axially between the lower section and the upper section that tapers from the diameter of the lower section to the increased diameter of the upper section. The tapering section has a wedging function that provides a smooth transition between the lower and upper sections as the probe is inserted through the aperture causing expansion of the aperture.

The present invention will now be described by way of example only with reference to the following illustrative figures in which:
Figure 1 is an automated sampling system according to an embodiment of the invention;
Figure 2 shows a sampling probe according to an embodiment of the invention;
Figure 3 shows an exploded view of a sample vessel and probe according to an embodiment of the invention;
Figure 4 shows the assembled arrangement of Figure 3 with the probed inserted;
Figure 5 shows a vessel sealing plug arrangement according to an embodiment of the invention;
Figure 6 shows a vessel sealing arrangement according to another embodiment of the invention;
Figure 7 is a top view of a sample probe cleaning apparatus that is not in accordance with the invention as described in the accompanying claims ;
Figure 8 is a section view along line A-A of Figure 7;
Figure 9 is a probe adaptor according to an embodiment of the invention;
Figure 10 is a view from below of the probe adaptor of Figure 9;
Figure 11 shows an oven adaptor that is not in accordance with the invention as described in the accompanying claims
Figure 12 shows the oven adaptor of Figure 11 inserted an oven in use;
Figure 13 is an autosampler assembly that is not in accordance with the invention as described in the accompanying claims;
Figure 14 is a section view of a latching arrangement that is not in accordance with the invention as described in the accompanying claims;
Figure 15 is a view from above of the arrangement of Figure 14;
Figure 16 shows a sample probe adaptor including a gripper mechanism according to an embodiment of the invention;
Figure 17 shows a further view of the sample probe adaptor of Figure 16; and
Figure 18 shows the sample probe adaptor of Figure 16 connected to a sample vessel.

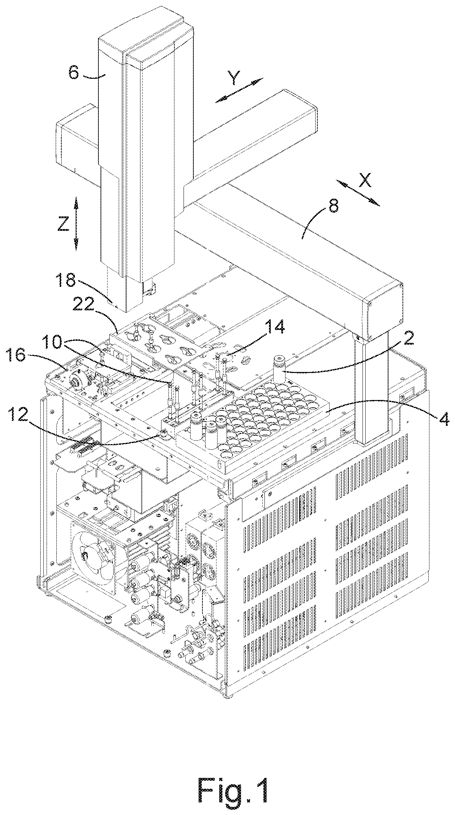

Referring to Figure 1, an apparatus 1 is provided for the sampling and analysis of collected liquid samples. The collected liquid samples are contained in sample vessels 2. A plurality of sample vessels 2 are held in a sample tray 4. The sample vessels 2 each hold a volume of liquid, referred to as the 'bulk liquid' and a volume of gas present above the bulk liquid referred to as the 'headspace'. In the embodiment of Figure 1, the apparatus 1 is capable of sorptive sampling and liquid sampling of the bulk liquid sample, and sorptive sampling of the headspace.

The apparatus includes a standard three axis x,y,z linear actuator having a robotic arm movable in the X and Y direction along a rail 8. A plurality of sorptive sample probes 10 are held within a probe carrier 12. The apparatus 1 further includes a wash and dry station 14 and an oven 16 connected to a cold trap and gas chromatograph. A probe adaptor 18 is provided that is connected to the robotic arm that enables the robotic arm to acquire the probes 10 as will be further described below. The probe adaptor 18 functions to configure the standard robotic arm that is typically used for syringe analysis, to be able to acquire a sample probe 10. The probe adaptor 18 is also configured to enable the robotic arm to acquire the sample vessels 2. As such the probe adaptor 18 enables the transit of a sample vessel 2 and a probe 10 simultaneously or independently.

During automated sorptive sampling of a liquid sample held within a sampling vessel 2, an initial pre-sampling stage is first conducted by the apparatus 1 in which the sample vessels 2 and sorbent carrying sample probes 10 are prepared. The following pre sampling steps are not exhaustive and are not limited to being conducted in the described sequence. Firstly a sample vessel 2 is selected from a plurality of sample vessels 2 stored in the sample vessel tray 4, the selection being a determination by the controller under the operation of the control software as to which sample vessel 2 is to be analysed. The robotic arm 6 is then operated to acquire the selected sample vessel 2 from the sampling tray 4. The robotic arm 6, having acquired the probe adaptor 18, lifts the sampling vessel 2 from the sampling tray 4 and moves it to an incubating agitator 22 that is arranged to heat and/or agitate the vessel 2 as determined by the particular requirements of the sample contained within the vessel 2. This incubation/agitation stage is conducted to achieve pre-sampling equilibrium of the sample.

Prior to sampling, the sample probes 10 are thermally pre-conditioned by heating to ensure cleanliness of the probe 10. Thermal pre-conditioning may be achieved using the oven 16 or with a dedicated probe conditioning unit (not shown). Once pre-conditioned the probes 10 are used immediately or stored in the probe carrier 12. The probe carrier 12 includes channels configured to receive the probe tip which comprises the sorbent material, with the channels being sealed to maintain probe integrity while the probes 10 are stored therein.

A pre-conditioned sorptive sample probe 10 is selected from the plurality of probes 10 stored in the probe carrier 12 and the selected probe 10 is acquired by the robotic arm 6 using the acquired probe adaptor 18. Once held by the robotic arm 6 the sample probe 10 is ready to commence sampling.

In the sampling stage the sampling process and parameters depend on the sample to be taken. Sorbent sampling may comprise the sampling of a bulk liquid contained within the sampling vessel 2 or headspace present above the bulk liquid within the vessel 2. The variables in the sampling process include the positioning of the probe 10 within the vessel 2, the required sampling period, and agitation speeds, each of which are able to be user defined in the system with each of the elements being controlled by a common controller and user interface.

The sample probe 10 that has been selected and engaged by the robotic arm 6 in the pre-sampling stage is moved by the robotic arm 6 to the x,y location of the selected sample vessel 2. The sample vessel 2 may be located in the incubating agitator, having been transferred to this location in the pre-sampling stage. The probe robotic arm 6 then extends the probe 10 downwardly in the z axis to introduce it into the sample vessel 2, as will be described in further detail below.

For liquid sampling the sample probe 10 is inserted into the sample vessel 2 such that the sorptive material at the tip of the sample probe 10 is introduced into the liquid sample. Once the probe 10 is fully inserted and the tip sealed within the sampling vessel 2, the sample probe 10 is disengaged and released by the robotic arm 6 and left to sample within the vessel 2 for the required sampling period. The robotic arm 6 is then free to perform further operations such as manipulating further sampling vessels 2 and sample probes 10. The ability to disengage the sample probe 10 enables multiple, simultaneous, overlapping samples to be prepared and conducted by a single robotic arm 6. This also enables the sampling time for each sample vessel 2 to be independently set, and each vessel 2 may have a different sampling period to other sample vessels 2 as required. The sample probe 10 insertion and extraction times and periods may be controlled to optimise use of the robotic arm 6.

The sample probe 10 is allowed to remain within the sample vessel 2 for a period that is predetermined by the user and/or the processor controlling the apparatus depending on the sample requirements. The sampling period may be specifically defined for each sampling vessel 2, and varied from sample to sample if required depending on the contents of the sample vessel 2 and the information required from the sample. During the sampling period, compounds contained within the sample are acquired by the sorptive material present on the probe 10. During sampling the sample vessel 2 may be agitated and/or incubated.

The robotic arm 6 is operated to remove the sample probe 10 from the sample vessel 2 once the sampling period has expired. Prior to removal of the sample probe 10 from the sample vessel 2 the probe 10 and vessel 2 are removed from the agitator by the robotic arm through engagement of the arm 6 with the vessel 2. Preferably the probe adaptor 18 is configured to magnetically connect to the cap of the vessel 2 to allow the vessel 2 and probe 10 to be lifted by the robotic arm 6. The vessel 2 and sample probe 10 are transferred from the agitator 22 to the sample tray 4. The sample probe 10 is then removed from the vessel 2 by the robotic arm 6. The vessel 2 is released by the robotic arm 6 and remains in the sample tray 4. The vessel 2 can then be capped by the plug element or sealing cap to seal the vessel 2. This may be done while the probe 10 is held by the robotic arm 6, or once the probe 10 has been deposited in the oven.

In the pre-desorption stage, between sampling and desorption of the sample in the sample oven 16, the sample probe 10 that has been removed from the sample vessel 2 is transferred to the wash station 14 by the robotic arm 6 to remove any residual liquid or debris that may be present on the sample probe 10. Where the sample probe 10 has been inserted in a liquid sample, liquid droplets and/or a surface film may remain on the probe 10 on removal from the sample vessel 2. To achieve consistent an accurate sample analysis it is important that excess liquid is removed from the sample probe 10 to ensure that only the compounds absorbed into the sorbent material are desorbed and analysed. It has also been found that the certain liquids present on the surface of the sample probe 10, particularly those containing substances such as sugars, can burn and smoke in the high temperatures of the oven 16.

The wash station 14 provides jets of cleaning fluid, which may be filtered water or a detergent solution or optionally solvents, at user defined flow rates, dilutions and durations that are directed onto the sample probe 10. The wash station 14 further includes a plurality of air jets. Following the washing stage the air jets are activated to direct jets of air onto the sample probe 10 to dry the probe. The jets are arranged to create an air curtain, and the sample probe 10 is slowly withdrawn from the wash station 14 during the drying phase, drawing the end of the sample probe 10 through the air curtain to optimise drying efficiency. The wash station 14 is described in further detail below.

The washed and dried sample probe 10 is transferred by the robotic arm 6 to the oven 16. The sample probe 10 is lowered in the z axis into the sealed entry port of the oven 16. The oven 16 includes a sliding latch mechanism that is arranged to slide to a locked position once the probe 10 is inserted in the inlet port of the oven 16. The latch engages with the probe 10 and locks it in position within the oven by vertically restraining it in the z axis to prevent release from the oven 16. With the sample probe 10 restrained and locked in position by the latch, the robotic arm 6 is able to release the sample probe 10 without risk of the sample probe 10 being ejected from the oven 16 by the pressures generated therein. Again, once the robotic arm 6 releases the probe 10 it is free to perform further operations.

With the sample probe 10 inserted and locked in the oven 16 an automated leak test is performed to ensure sample integrity. The sorbent material on the sample probe 10 is then heated by the oven 16 and the compounds collected on the sorbent material from the sample vessel 2 are transferred in a flow of inert carrier gas to a focussing trap, commonly referred to as a cold trap. The sample is then released rapidly from the focussing trap and at least a portion of the released sample is transferred to a gas chromatograph (GC) for analysis. Part of that released sample may also be to a sorbent tube. In this instance, the cold trap acts as a buffer, holding the sample while a sorbent tube is arranged for collection of the sample. The collection of the sample on a sorbent tube enables archiving of the sample for future reanalysis. The sample on the sorbent tube may also be reanalysed shortly following the initial analysis if the sampling procedure requires one or more reanalysis steps. The system utilises a sorbent tube 'auto sampler', comprising a tube magazine or carousel and an oven. The magazine of the autosampler contains a plurality of sorbent tubes. Following release from the focussing trap the sample may be split and a portion of the released sample may be channelled to a sorbent tube which is selected from the magazine by the autosampler. The sorbent tube may be clean of any sample, or may hold previous samples obtained during the sampling procedure. For example, the sorbent tube may hold a head space sample, which is then supplemented by the sorbent sample to give a more complete analysis of the sample compound. The sorbent tube holding that sample may then be replaced by a further tube from the magazine, or the autosampler sorbent tube oven may be used to re-release the stored sample to the GC for secondary analysis.

The combination of an autosampler with the automated probe sampler enables rapid sample analysis with the option for repeat analysis as well as the possibility of concentrating multiple samples onto a single sorbent tube and/or the possibility of archiving the sample. These facilities do not presently exist for an automated probe sampling system.

Following release of the sample to the cold trap the oven 16 is isolated from the carrier gas. The oven 16 is then cooled, and once cooled the robotic arm 6 reattaches to the probe 10 and the latch mechanism dis-engages. The sample probe 10 is then removed from the oven 16 and replaced into the probe storage container 12 for re-use. A lid closes over the oven 16 following removal of the sample probe 10 to prevent the ingress of debris.

During the above described process of analysis of a single sample, when the robotic arm 6 is disengaged from the sample probe 10 it may be operated to conduct one or more further pre-sampling, sampling, pre-desorption and desorption operations for multiple further sample vessels probes. The controller may be programmed to operate these multiple simultaneous operations in the most efficient manner to maximise throughput for optimal productivity.

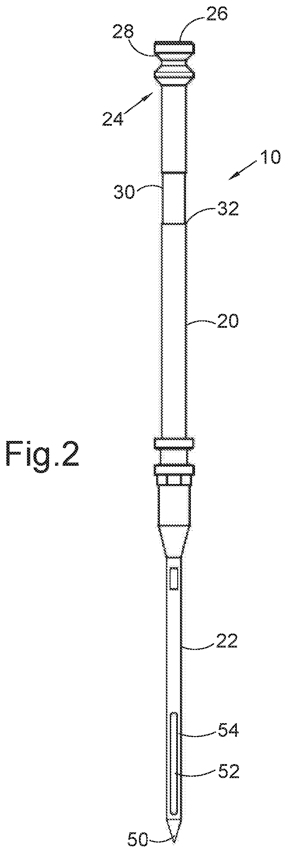

Referring to Figure 2, the sample probe 10 includes a stem section 20 and a tip section 22. The stem section 20 comprises the main body of the probe 10. The cylindrical stem section 20 includes at its upper end 24 a connector portion 26 having a greater diameter than the main shaft of the stem section 20. The connector portion 26 includes a circumferentially extending bevelled engagement channel 28 of reduced diameter that is configured to receive a corresponding latching element of a z-axis actuator of the robotic arm 6. The latching element may be a spring loaded ball catch or any other suitable element that is configured to extend into and engage with the channel 28 to vertically retain the probe 10. The z-axis actuator further includes a release mechanism that slides vertically to release the spring loaded ball catch.

The stem 20 includes a locking section 31. The locking section 31 includes upper 34 and lower 36 radially extending shoulder sections having a diameter greater than the main body of the stem 20 with a channel 38 formed there between. The channel 38 is arranged to receive a latch plate or similar locking element. The latch plate is arranged such that at a given location, when the probe 10 is received at a location where it is required to vertically lock the probe 10 in position, the latch plate is vertically aligned with the channel 38 and preferably such that the lower surface of the latch plate is vertically aligned with the upper surface of the lower shoulder 36. The probe 10 may be received through an aperture in the latch plate. The latch plate is horizontally slidable to a locked position in which at least part of the plate is received within at least part of the channel 38. When the latch plate is received in the channel 38, removal of the probe 10 in the vertical direction is prevented by engagement of the lower shoulder 36 with the latch plate.

The stem has section 30 recessed to have concentric rings printed, laser marked or other to provide a barcode or other identifier for the probe. Section 30 is recessed so to minimise wear to the barcode or other identifier. The barcode or other identifier is located within the probe adaptor 18 as barcode reader 122 or as a separate module (not shown).

The upper stem section 20 includes an internal channel that includes an internal thread at the base end. The lower stem section 22 includes a corresponding threaded portion that engages with the threaded section of the upper stem section 20 to connect the lower stem section 22 to the upper stem section 20. The upper end 44 of the lower stem section 22 has a diameter consistent with the diameter of the upper stem section 20. The diameter of the lower stem section 22 reduces along its length at tapered section 46 to a reduced diameter lower end section 48. At its distal end the lower stem section 22 includes a pointed piercing tip 50 to assist insertion of the probe through the aperture of the septum of a sample vessel.

The lower stem section 22 includes a sorbent material. In the arrangement of Figure 2 the sorbent material is provided a pair of longitudinally aligned and diametrically opposed grooved sorbent channels 52. The sorbent channels 52 are longitudinally extending and are recessed radially inwardly into the body of the lower stem section 22. The sorbent channels 52 have equal lengths and have a first lower end that is spaced longitudinally inboard from the tapered, pointed tip 50. The upper end of each channel 2 is spaced longitudinally downwards from the tapered section 46. The sorbent channels 52 contain a sorbent material 54 suitable for conducting sorptive sampling. Preferably the sorbent material 54 is Polydimethylsiloxane (PDMS) however other materials as detailed in the claims could foreseeable be used. The dimensions of each channel 52, including length, depth and width, are selected to define the volume of sorbent material 54 contained.

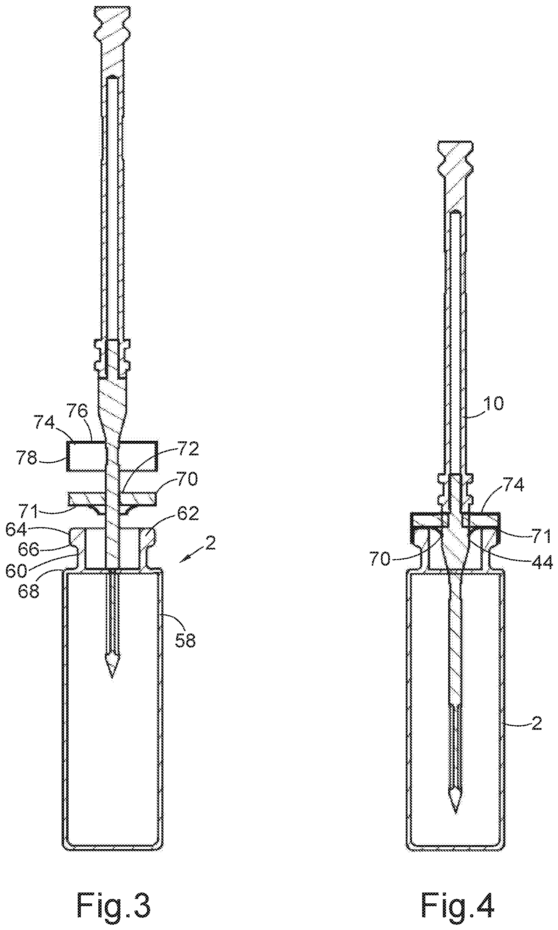

As shown in Figure 3 the sample vessel 2 includes a cylindrical hollow glass body 58 defining a storage container, and a neck 60 having a rim 62 at its opening. The rim 62 includes an outwardly extending rib 64 having a lower edge 66 spaced from the upper shoulder 68 of the body section 58. A silicone disc 70 having a diameter corresponding to that of the rim 62 seats on the upper surface of the rim 62 and provides the septum of the container. The septum 70 includes a central aperture 72 having a diameter configured to allow passage of the lower section 48 of the probe 10. The diameter of the aperture 72 is equal to or greater than the diameter of the lower section of the tip 22 but less than the diameter of the upper section. A PTFE membrane 71 is located beneath the silicon septum 70 which seats on the rim 62 between the rim 62 and the septum 70. The PTFE membrane 71, which is formed as a disc, is bonded to the silicon septum to optimise the seal between the two components. The PTFE membrane does not include an aperture and seals the vessel 2 to prevent the release of gas through the aperture 72 of the septum. As the probe 10 is inserted through the aperture 72 it pierces the PTFE seal. As illustrated in Figure 4 the PTFE seal 71 bends inwardly as it is pierced by the lower end of the tip section 22 of the probe 10.

The vessel 2 further includes a metal cap 74 having an annular upper surface 76 with an opening aperture that is greater than the largest diameter of the probe 10 such that the probe 10 can be inserted through the aperture of the cap 74 without engaging the edge of the opening in the upper surface 76. The cap 74 further includes a side wall 78 open at its lower edge. The diameter of the cap 74 is substantially equal to the diameter of the rib 66 such that the cap 74 is able to be inserted over the rib 66. The lower end of the side wall 78 is then crimped over the lower edge 66 of the rib 64 to secure the cap 74 in positon on the rim 62. The septum 70 and PTFE seal 71 are held in position between the cap 74 and the rim 62. The opening aperture of the cap 74 is greater than the aperture 72 of the septum seal. The aperture 72 is therefore spaced radially inwards of the opening aperture of the cap 74 exposing a section of the septum seal between the inner periphery of the opening and the aperture 72. This exposed annular section of the septum enables the septum to be pierced by a syringe to take a sample from the vessel 2, such as a head space sample, prior to sorptive sampling. The septum 70 is able to reseal on retraction of the syringe needle, and as the exposed PTFE membrane 71 within the aperture remains intact, the seal of the vessel is maintained.

The reduced diameter of the lower section 48 of the tip section facilitates easy initial insertion of the probe 10 through the aperture 72 of the septum 70. The diameter of the lower section 48 is selected such that in use it slides through the opening of a septum relatively easily and with limited friction. The diameter of the aperture 72 may be selected to provide a slight sealing fit with the lower section 48, or such that the periphery of the aperture is spaced from the lower section 48 to prevent rubbing of the lower section 48 against the septum 70. As the probe 10 is further inserted the tapered section 46 arrives at the septum 70. The expanding diameter of the tapered section 46 transitions to the larger diameter section 44. The diameter of the aperture 72 is selected such that it is less than the diameter of the upper section 44, providing a close tolerance or preferably interference. In this way, as the upper section is received in the aperture 72 a positive seal is with the septum 70.

This sealing engagement between the upper section 44 and the septum 70 seals the vessel 2 in a very simple manner without requirement for a more complex arrangement of additional seals on the sample vessel and/or the probe 10.

Prior to insertion of the probe 10, the vessel 2 is sealed by the PTFE membrane 71. To obtain a sample from the vessel 2 the probe 10 is inserted through the preformed aperture 72 of the septum 70. The tip 50 pierces the PTFE membrane and the probe 10 extends though the septum 70 and PTFE membrane 71 into the vessel 2. Figure 4 shows an arrangement in which the probe 10 has been inserted into the sampling vessel 2 such that the lower section 48 of the tip section 22, and the tapered section 46 are inserted fully through the opening 72 in the septum 70. The opening has been expanded to the larger diameter of the upper part 44 of the tip section 22. In this condition the aperture 72 is stretched by the larger diameter of the upper section 44 of the tip section 22 and the engagement between the inner edge of the opening 72 and the outer surface of the upper section 44 creates a liquid and gas tight seal as well as providing a sufficiently tight interference fit such that the sampling vessel 22 may be lifted by the probe 10 if required. In addition the engagement of the aperture 70 with the outer surface of the tip section 22 is such that the septum 70 acts to wipe a substantial amount of liquid from the tip section 22 as the probe 10 is retracted from the sample vessel 2.

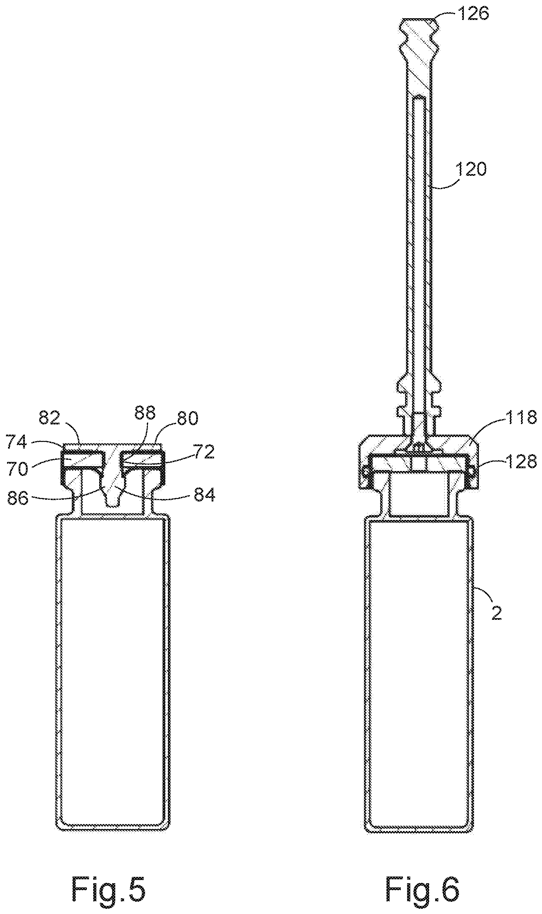

On retraction of the probe 10 from the sample vessel 2 the aperture 72 remains open. Therefore, as shown in Figure 5, a stop 80 is provided for closing and sealing the aperture 72. The stop 80 includes a disc shaped cap portion 82 and a plug section 84 extending from the lower surface of the cap section 82. The plug section 84 is substantially cylindrical and centrally located and is configured to be inserted through the aperture 72 of the septum 70. The plug 84 includes an enlarged diameter lower section 86 with the upper part 88 of the plug section 84 having a reduced diameter relative to the distal end that is greater than the un-stretched free-state diameter of the aperture 72. The plug 84 is inserted through the aperture 72 and once fully inserted the cap section 82 seats on the upper surface 76 of the cap 74 of the sample vessel 2. Once the larger diameter section 86 of the plug 84 has passed fully through the aperture 72 the enlarged diameter acts as a barb and assists in retaining the plug 84 within the aperture and preventing retraction. As the upper section 88 has a diameter larger than the diameter of the aperture 72 it seals with the aperture 72 in the same sealed manner as the probe 10. The sealing cap 82 is formed of metal so that it may be magnetically lifted by the probe adapter 18 of the robotic arm 6 in the same manner as the cap 74 of the sealing vessel 2.

Alternatively to the stop 80, Figure 6 shows a sealing cap 118 that can be applied to the sampling vial to seal the vial post-sampling. This cap 118 comprises a stem 120 and head section 126 which correspond to the shape of the stem 22 and head 26 of the probe 10. The cap 118 is configured to fit over the upper end of the sampling vessel 2. An o-ring 128 or similar seal may be provided around the inner edge of the cap 118, which seals against the outer surface of the cap 78 and the upper end of the vessel 2. The sealing cap 118 is pressed onto the sampling vessel 2 using the robotic arm and a seal is created between the internal diameter 118 and the outer diameter of the cap 78 of the vessel. The shape of the stem 120 and head section 126 enables the stem 120 to be connected to and lifted by the robotics arm to transport the vessel 2.

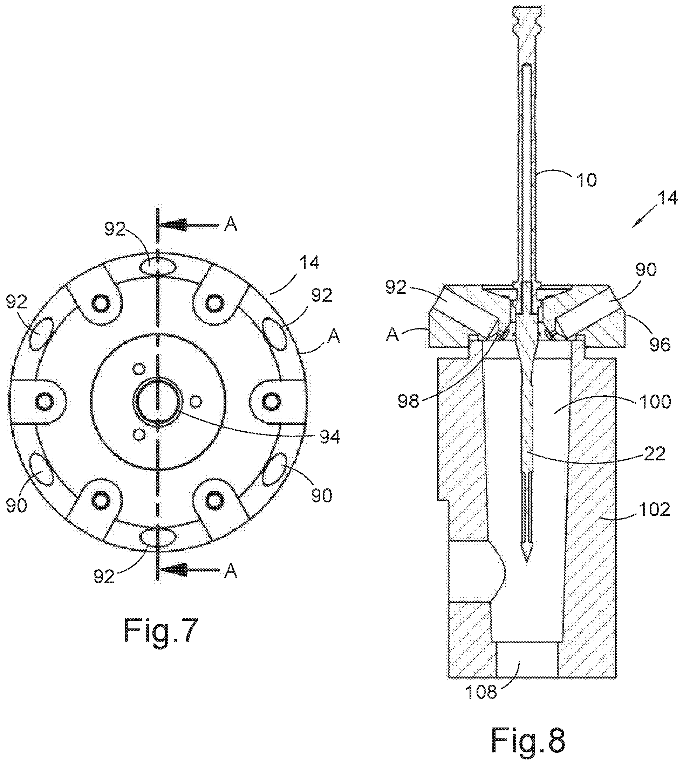

Figure 7 shows a view from above of the wash/dry station 14. The cap section 87 of the wash/dry station 14 includes a plurality of inlet apertures. A first set of inlet apertures 90 are connected by a plurality of liquid conduits to a supply of washing liquid, as described above. A second set of inlet apertures 92 are connected to a source of pressurised air. An opening aperture 94 is located centrally in the cap 87 for receiving the probe 10.

A section view through line A-A is shown in Figure 8. The liquid and air inlet ports 90, 92 are arranged in an annular array, formed in an annular bevelled surface extending downwardly from the upper surface of the cap section 87. The inlets 90, 92 are angled downwardly, substantially perpendicular with the surface of the annular bevelled surface through the body of the cap section 87. The wider outer ends of the channels 90,92 define connection ports for connection to by connectors for securing to the liquid and air conduits. The channels taper inwardly at their inner ends to a reduced diameter outlet section 98 extending into the inner chamber 100 defined within the body 102 of the wash station 14. Nozzles may be provided at the inner ends of the inlets 98 which are configured to provide the required flow and jet characteristics of liquid or air into the chamber 100.

In a first stage of the wash programme washing fluid, which could be heated, cooled or ambient is provided to the liquid inlets 90 and is pumped under pressure through the inlet channels 98. A spray is created by the flow of liquid into the chamber 100 that is directed onto the tip section 22 of the probe 10. The timing of the liquid spray may be selectively varied and user defined. For example, the spray may be activated once the sample probe 10 is fully inserted into the chamber 100. Alternatively the spray may be activated during or prior to the probe 10 being first introduced into the chamber so the probe 10 is directly sprayed along its length as it is inserted into the chamber 100. The downward angle of the liquid inlet 90 means that the jet is directed downwardly onto the tip section 22. This limits any splash back or spray upwardly through the inlet 94 in the absence of a seal, which is further limited by a close fit between the probe 10 and the inlet opening 94. The avoidance of a seal prevents the potential for contamination the clean probe 10 through contact with a seal that may harbour contaminants as it is withdrawn from the chamber 100. The annular arrangement of the plurality of liquid inlets 90 around the cap means that the entire periphery of the tip section 22 is sprayed. Liquid run off from the tip section 22 flows downwardly to the outlet 108 through which it is drained from the chamber 100.

The controller is configured to run the wash cycle for a pre-determined period. Once the wash cycle has completed the drying cycle is commenced. This may be commenced immediately or after an interval provided to allow the bulk of the liquid to drip away from the tip section 22. Pressurised air is pumped through the air inlets 92 into the chamber with the annularly arranged air jets creating an air curtain circumferentially around the periphery of the tip section 22. As with the liquid inlets 90, the air inlets 92 are angled downwardly towards the base of the chamber 100. The air curtain is localised in the region of the air inlets 92 although some drying does occur below this due to the circulation of air created within the chamber 100. Once the air curtain has been created by the air inlets 92 the probe 10 may be withdrawn vertically from the chamber 10. As the probe 10 is withdrawn upwardly the tip section 22 is pulled through the air curtain providing drying along its entire length. To improve drying efficiency the air supply to the inlets 92 may be heated or cooled prior to entry into the chamber 100. The Wash/Dry station 14 can also be used to remove sample from the probe by passing solvents over the probe 10. This liquid sample can be collected on exit from the base of the chamber 100.

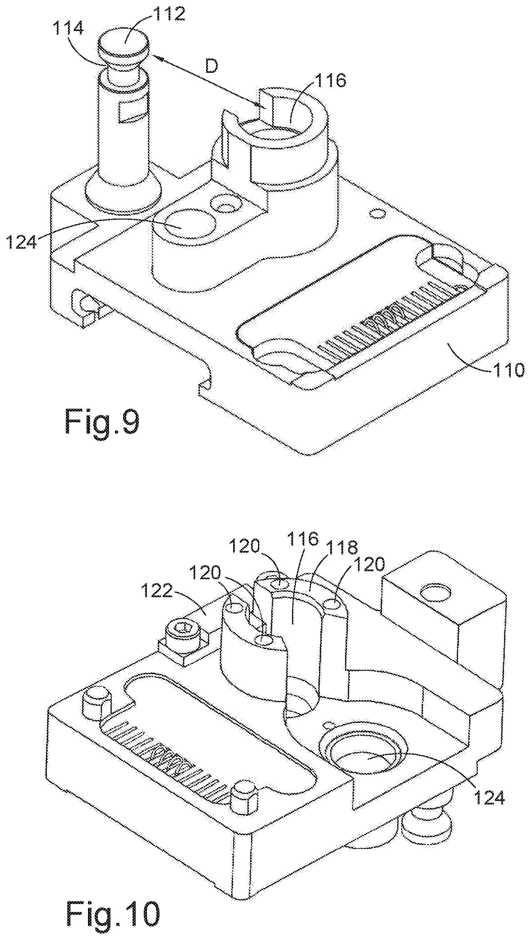

To enable the robotic arm to manipulate the sample probes 10 a probe adaptor 18 is provided which adapts the robotic arm for use with a sample probe 10, as shown in Figure 9. The probe adaptor or transit assembly 18 is also designed to transit sample vessels 2 and/or both sample vessels 2 and probe 10 simultaneously. The probe adaptor 18 includes a body 110 with a first pick up connector 112 extending upwardly from the body 110. The pick-up connector 112 has a head 114 having the same configuration as the head 26 of a stem 20 of a probe 10. The adaptor pick up connector 112 is configured to be acquired and connected to by the fixed mechanical latch of the robotic arm 6.

A first one of the z-axis actuators of the robotic arm 6 is spaced laterally from a second z-axis actuator by a distance D. An aperture 116 is formed in the body 110, the circular aperture 116 having a central axis that is spaced a distance D from the longitudinal axis of the adaptor pick-up connector 112 such that it is coaxial with the second z-axis actuator when the probe adaptor 18 is connected to the fixed latch mechanism of the first z-axis actuator. A hollow cylindrical wall 118 extends around the periphery of aperture 116 that is upstanding from the upper surface of the probe adaptor 18. The wall 118 is semi annular with a gap formed therein, and includes an upper surface 119. In use, when the second z-axis actuator moves downwardly through the aperture 116 to a release depth the sliding collar of the release mechanism engages the upper surface 119 to release the spring loaded latch and allow the sample probe 10 to be detached. Without the stop surface provided by this element of the probe adaptor 18 it would not be possible for a standard z-axis actuator of a robotic arm to release a sample probe 10 as required for multi-sample automated sampling.

As shown in Figure 10, a cylindrical wall 123 extends downwardly from the lower surface of the body 110. A magnet or plurality of magnets 121 are provided on the lower edge of the wall 123. The diameter of the aperture 116 is selected to enable the probe 10 to extend up through the aperture 116 unhindered and is greater than the diameter of a probe 10. The probe adaptor 18 also includes a barcode reader 122 arranged to read a recessed barcode section provided on the stem 20 of the probe 10. This enables each probe 10 to be tracked through the sample and analysis process.

In addition to a first probe 10 attaching to robotic arm 6 through primary aperture 116, a second identical probe can connect to the robotic arm along a secondary axis 124 using a secondary z-axis actuator. This allows the robotic arm 6 to transport up to two sample probes 10 as well as a sampling vessel 2 at any time.

In use the probe adaptor 18 is selected and acquired by the robotic arm 6, with the first z-axis actuator of the robotic arm picking up the probe adaptor 18 by the pick up connector 112. The diameter of the annular wall 123 is preferably substantially equal to the diameter of the lid of a sample vessel but may be any suitable configuration that allows at least part of magnet section 121 to seat on and engage the cap of the sample vessels 2 when the aperture 116 is aligned co-centrically with the sample vessel 2. The probe adaptor 18 may acquire a sample vessel 2 by placing the lower surface of the wall 123 into contact with the cap 74 of the sample vessel 2 such that the magnetic portion 121 secures magnetically to the metal cap of the sample vessel 2. This may be done with or without a sample probe 10 located in the sample vessel 2. The probe adaptor 18 may also be moved to acquire a probe 10 by aligning the aperture 116 co-centrically with the axis of the probe 10. The stem 20 of probe 10 is able to extend up through the aperture 116, the Z axis actuator of the robotic arm 6 is then able to acquire the probe 10 by connecting to the head 26 of the stem 20. The probe 10 is able to be actuated in the Z axis through the aperture 116.

The probe adaptor 18 is also able to acquire a probe 10 and sample vessel 2 when the probe 10 is inserted in the sample vessel 2 for sampling. In this arrangement the probe adaptor 18 may be lowered over the probe 10 until the magnetic section 121 engages the cap of the sample vessel 2 with the probe 10 extending. The probe 10 is then simultaneously engaged by the Z axis actuator and the probe adaptor 18 is lifted by the Z axis actuator with the sample vessel 2 being lifted directly by its cap 74 rather than by the probe 10. However it will be noted that the seal between the probe 10 and the sample vessel 2 is such that the sample vessel 2 may be lifted directly by the probe 10 when lifted by the Z axis actuator without compromising the seal lid between.

The robotic arm 6 may be controlled and operated to select and acquire a probe adaptor 18 from the adaptor changer station. The adaptor changer station houses the probe adaptor 18 and a headspace syringe tool, as will be described in further detail below. The probe adaptor 18 functions as an adaptor that configures the standard robotic arm 6 typically used for syringe analysis to be able to acquire a sample probe 10. The probe adaptor 18 is also configured to enable the robotic arm to acquire the sample vessels 2.

The advantages of using a similar mechanism to that used to acquire and operate a syringe adaptor are evident in that a series of operations utilising a syringe and a probe 10 may in turn be carried out automatically on a single sample, or a series of samples thereby increasing sample throughput and analytical flexibility. As an example a syringe may be provided to enable headspace sampling. The needle of headspace syringe is configured to be inserted through a septa sealed of a sample vessel to collect a sample of the headspace gas. The headspace syringe is configured to be engaged, and manipulated by the same robotic arm used to manipulate the probes 10.

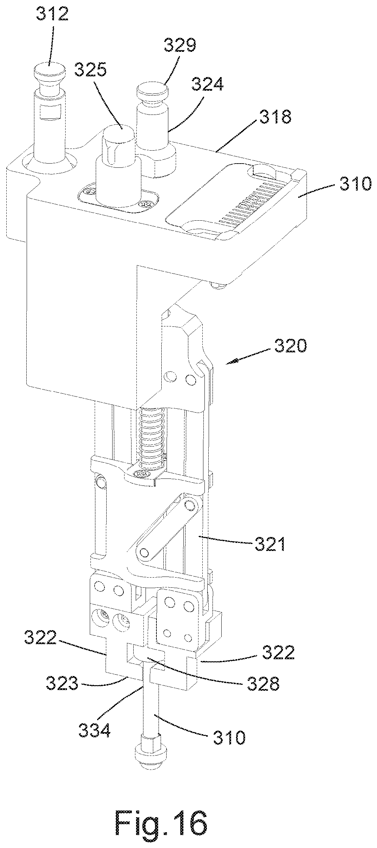

In an alternative embodiment as shown in Figure 16 the probe adaptor 318 includes a gripper tool 320 configured to grip the sample probe 310. The gripper tool 320 comprises opposing fingers 322 which are movable between a closed and an open configuration to grip and release the sample probe 310. The griper tool 320 includes gripper fingers 321 having tips 323 configured to securely grip the head of a sample probe 310 such that probe is linearly fixed relative to the gripper 320. The probe adaptor 318 includes a pick up connector 312 extending from the body 310 that enables the probe adaptor 318 that is configured to be acquired and connected to by the fixed mechanical latch of the robotic arm to pick up and move the probe adaptor 312. The probe adaptor 318 further includes a second connector 324 that projects upwardly from the body 310, which is operatively connected to the gripper tool 320. The second connector 324 includes a connection head 326 having the same configuration as the connection head of the pick-up connector 312 that is arranged to be connected to by the robot.

The probe adaptor 318 further includes a third connector 325 which includes connection head 329 having the same configuration as the connection head of the pick-up connector 312 that is arranged to be connected to by the robot.

When connected to by the robot, linear actuation of the third connector 325 by the robot causes the gripper tool 320 to rotate about the vertical axis of the second connector 224. This rotation allows the rotation of the sample probe 310 which in turn allows positioning of the sample probe 310 in any direction. A use for this mechanism is the automated reading of barcodes fitted to the body of sample probe 310 or on the sample vessel 2.

When connected to by the robot, linear actuation of the second connector 324 by the robot causes the gripper tool 320 to open and close. During a probe sampling cycle, the gripper tool probe adaptor 318 is acquired by the robot. The robot connects to the first 312 and second 324 connectors. The robot may then pick and release sample probes and vessels as many times as the sample cycle requires by actuating the gripper tool 320, without disconnecting from the probe adaptor 318. The advantage of this arrangement is that it protects the connector of the robot from wear as it is only required to connect to the probe adaptor once during a sampling cycle. In contrast, in the previous embodiment the robot connects directly to the sample probes 10, and as such must connect and disconnect to every probe 10 during the sampling cycle. It is significantly easier and cheaper to replace the tips of the gripper fingers due to wear, compared with replacing the connector of the robot.

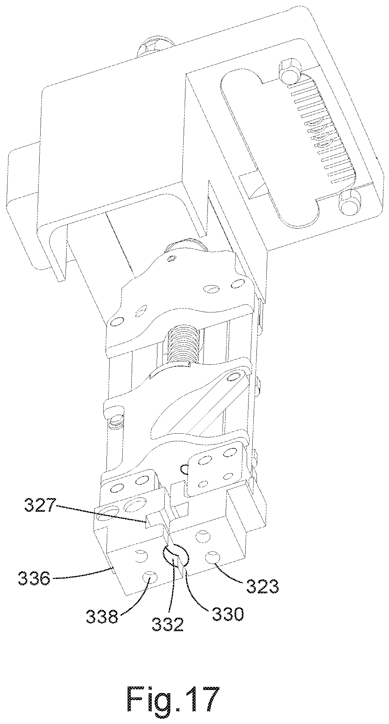

The tips 323 of the gripper fingers 321 each include a channel 327 that is configured to receive an enlarged diameter section 328 of the head of the sample probe 310. As shown in Figure 17, the opposing distal ends 330 of the tips 323 each include a curved cut-away section 332 corresponding to the outer surface of the reduced diameter section 334 of the head of the probe 310. The axial end face 336 of the tips 323, which in use face the sample vessel, include embedded magnets 338.

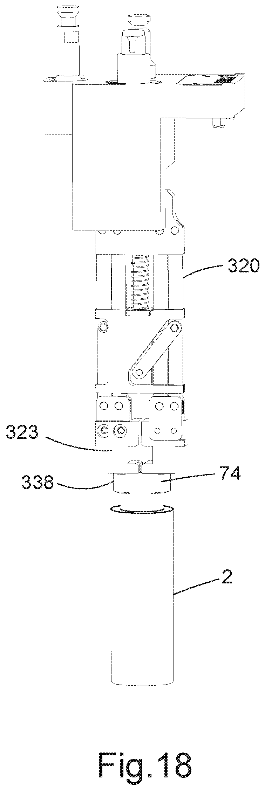

The magnets 338 are arranged to engage with the caps 74 of the sample vessels 2. As shown in Figure 18, the gripper tool 320 is moved into engagement with the cap 74. The magnets 338 located in the distal end face 336 of the finger tips 323 engage with and magnetically connect to the metallic cap 74. Once magnetically secured the gripper tool 320 is able to pick up the sample vessel 2. This enable the gripper tool to selectively acquire a sample vessel or sample probe allowing both to be manipulated by the robot without the need to change the probe adaptor.

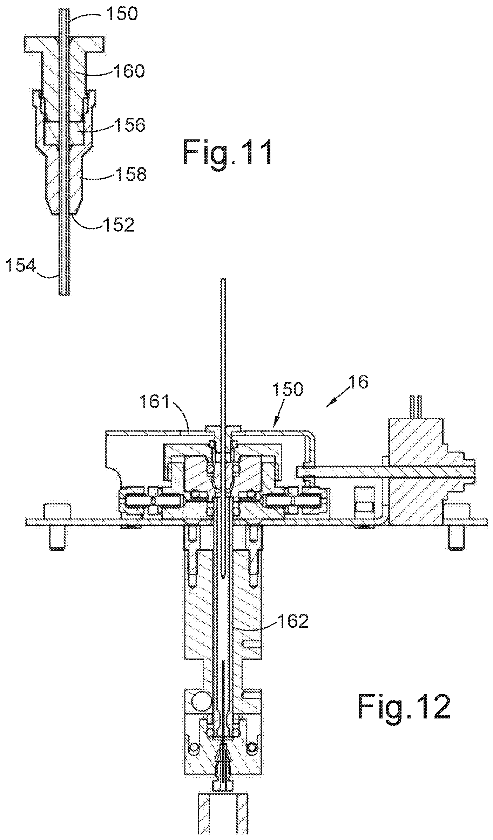

To facilitate combined liquid and headspace analysis of a sample the oven must be capable of receiving both a sample probe 10 and the needle of a headspace sampling syringe. The inlet aperture of the oven, as configured for use with a sorptive sample probe 10, is not suitable for use with a syringe needle. The fine needle is unable to create a seal within the relatively large inlet channel required for the sample probe 10. Therefore, an oven adaptor 150 is provided as shown in Figure 11. The oven adaptor 150 locates and secures within the inlet aperture of the oven 16. The oven adaptor 150 has and outer shape that corresponds to the shape of the upper part of the sample probe 10 and secures and seals within the opening of the oven 16 in the same manner as the sample probe 10. The oven syringe adaptor 150 has a central channel 152 which is in open communication with the heated chamber of the oven 16, and which is configured to receive a syringe needle 154. A sealing arrangement is provided to maintain a seal between the external atmosphere and the heated chamber of the oven when the needle is inserted in to the channel. In the arrangement of Figure 11 the gas seal arrangement between the syringe and the oven comprises a septum 156 held between the lower part of the adaptor body 158 and upper part 160.

The adaptor 150 is shown in Figure 12 fitted within the opening of the oven 16. The adaptor 150 fits and seals in the inlet in the same manner as sample probe 10. The oven adaptor 150 is held in position in the oven 16 by the same lid latch mechanism 161 as described above for retaining the sample probe 10 within the oven 16. The needle 154 passes through the septum 156 of the adaptor assembly 150 which creates a seal between the syringe needle 156 and interior of the oven 16. The sample is ejected from the syringe into the liner 162 of the oven 16 and is then swept by a carrier gas to the cold trap following which it is transferred to the GC as described above.

The shape of the head of the adaptor enables it to be manipulated by the robotic arm 6 to enable the oven 16 to be automatically reconfigured for use with both syringe based sampling and solid phase analysis in the same analysis run without user intervention. It is envisaged that the same principle may be adopted to configure the sample inlet to operate with other sample extraction devices.

As with probe sampling, further headspace samples may applied to the focussing/cold trap and/or second sorbent trap for archiving and repeat analysis. Once the required sample is present on the cold trap the oven 16 is isolated from the carrier gas and the focussing trap is heated in a flow of carrier gas directed onto the GC column for analysis and/or second sorbent trap for archiving and repeat analysis. Once the sample collected on the cold trap is delivered to the GC column or no further headspace samples are required, then the oven 16 is cooled. Once cooled, the robotic arm 6 engages the oven adaptor 150 and the latch 161 is dis-engaged allowing the oven adaptor 150 to be removed to enable insertion of a sample probe 10 as required.

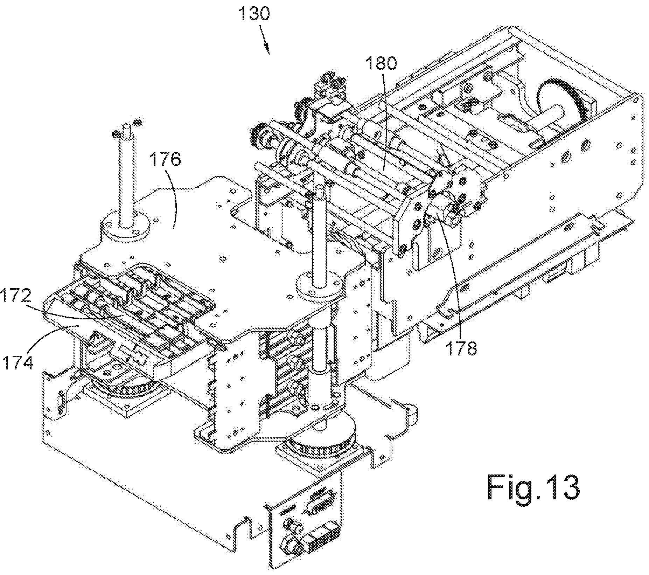

Figure 13 shows a multi-tube sampling assembly 170 in which one or more of the samples desorbed from the sample probe 10 or obtained from the headspace sample may be collected on a sorbent filled recollection tube 172 for archival purposes. The recollection tube 172 is loaded into sample tube tray 174 which is configured to hold a plurality of recollection tubes 172. The sample tube tray 174 is inserted into tray housing 176 which can hold a plurality of sample tube trays 174. The recollection sample tube tray 174 is moved via actuator to present recollection sample tube 172 at a position where it seals with a nozzle 178 via its cap. A valve arrangement directs a sample, in part or as a whole, either directly from the oven 16 or via the cold trap towards the tube 172, whereupon analytes within the sample are selectively adsorbed onto sorbent material contained therein.

A desorption oven 180 allows the collection tube 172 to be heated such that samples re-collected may be re-desorbed back to the same or alternative focusing device for reanalysis or further re-collection. It can be seen that in the same manner, samples collected on tubes independently of the embodiment may be analysed, and recollected.

The sampling apparatus preferably also includes an alignment element that engages the sample probe when it is received in the sample vessel to vertically align the probe to enable it to be connected to by the second vertical actuator. The sample probe is supported within the vessel by the flexible septum. In use, although the sample probe is inserted into the vessel in a completely vertical orientation, it may begin lean away from the vertical axis over time, particularly during agitation. If the sample probe is not aligned with the vertical axis it is difficult for the actuator, which operates in the vertical axis, top re-acquire the sample probe.

The alignment element may comprise a first and second alignment elements that are movable in horizontally opposing directions to move into engagement with opposing sides of the sample probe. The alignment elements are movable between an alignment position in which they engage the sample probe to hold it in a substantially vertical orientation, and a release position in which the sample probe and the sample vessel are able to be lifted vertically.

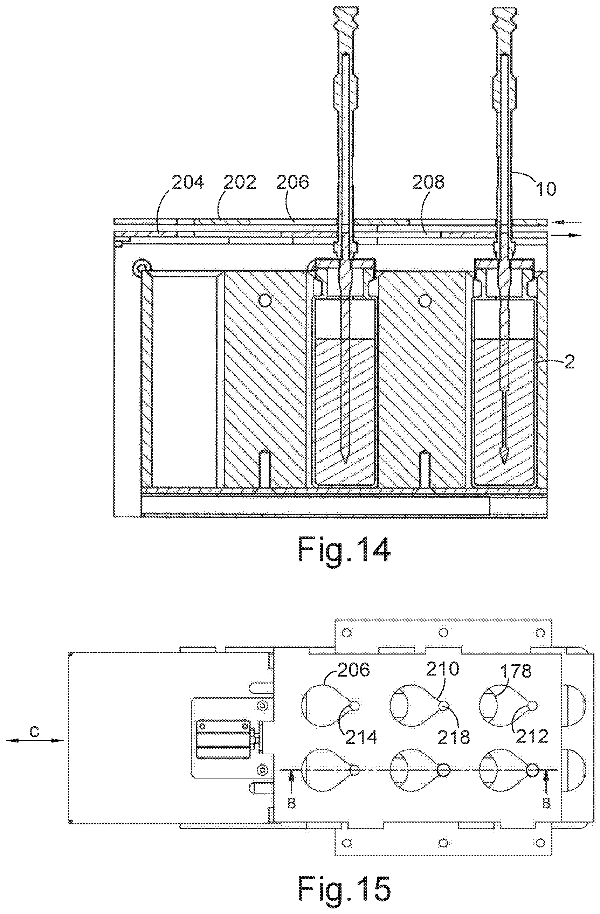

As shown in Figure 14, an alignment mechanism 200 is provided to vertically align the sample probes 10 when they are received in the sample vessels 2, for example during agitation. The alignment mechanism 200 includes a horizontally arranged upper alignment plate 202 and a lower alignment plate 204 arranged parallel to the upper plate 202. The upper plate 202 includes an aperture 206 and the lower plate includes and aperture 208, both of which have a diameter greater than the diameter of the sample vessel 2. The plates 202 and 204 are actuated to be moveable in opposing horizontal directions. As shown in Figure 15 the apertures 206 formed in the upper plate are substantially circular. Each aperture 206 includes a guide channel 210 extending therefrom. The upper plate 202 is movable in the horizontal direction in a longitudinal directional axis C. The guide channels 210 have a diameter substantially equal to the diameter of the stem of the probe 210, and extend from the apertures 210 in a common longitudinal direction corresponding to the longitudinal axis of movement C. The apertures 212 of the lower plate 206 are arranged in the same positional array as the apertures 210 of the upper plate 202 and in a first release position align fully with the apertures 210. The guide channels 214 of the apertures 212 extend in the opposing longitudinal direction to the guide channels 210. In the alignment position of Figure 15 the guide channels 210 and 214 align to define a circular aperture for receiving and engaging the sample probe 10. In the alignment position the aperture 218 defined by the guide channels 210 and 214 is centrally aligned with the sampling axis of the sample vessel 2. In this way, the sample probe 10 is held on the sampling axis at its lower end the sample vessel 2 and at its upper end by the aperture 218 of the alignment plates 202 and 204. In the release position the main apertures 202 and 204 align to define a channel through which the sample vessel is able to be vertically moved unhindered, which enable the actuator 6 to lift the sample vessel 2, and the sample probe 10, vertically through the alignment plates 202 and 204.

## Claims

1. A sampling apparatus for sorptive sampling comprising:
a sample vessel (2) for containing a liquid to be sampled;
a sample probe (10) having a probe section configured to be inserted into the sample vessel (2), the probe section including a sorbent material arranged to acquire analytes from the sample vessel (2); and
an actuator comprising a sample probe adaptor (18), the actuator configured to independently connect to and manipulate the sample vessel (2) and the sample probe (10) via the sample probe adaptor (18);
wherein the sample probe and the sample vessel (2) are detachably connectable to the actuator via the sample probe adaptor (18) such that the actuator is able to automatically connect to and detach from the sample probe (10) and the sample vessel (2) independently of each other or connect to the sample probe (10) and the sample vessel (2) simultaneously via the sample probe adaptor (18) to manipulate the sample probe (10) and the sample vessel (2) together when the sample probe (10) is received within the sample vessel (2).

2. A sampling apparatus according to claim 1 wherein the actuator is a three axis robotic arm.

3. A sampling apparatus according to claim 1 or 2 wherein the actuator includes a releasable connector and the sample probe (10) comprises a connector portion that is shaped to be detachably held by the releasable connector.

4. A sampling apparatus according to any preceding claim wherein the sample probe adaptor (18) has a first connector configured for releasable connection to the actuator and a second connector configured to releasably connect to the sample vessel (2) when the sample probe adaptor (18) is connected to the actuator to enable the actuator to connect to and manipulate both the sample probe (10) and the sample vessel (2).

5. A sampling apparatus according to claim 4 wherein the sample vessel (2) includes a cap including a metallic element and the second connector of the sample probe adaptor (18) comprises at least one magnet arranged to magnetically secure to the metallic element of the cap of the sample vessel (2).

6. A sampling apparatus according to claim 4 or 5 wherein the actuator includes first and second vertical actuators and the first connector of the sample probe adaptor (18) is arranged to connect to the first vertical actuator.

7. A sampling apparatus according to claim 6 wherein the sample probe adaptor (18) includes a gripper mechanism configured to grip the sample probe (10) to provide a releasable connection between the actuator and the sample probe (10), the gripper mechanism including a connection element configured to connect to the second vertical actuator to enable the gripper mechanism to be operated by the second vertical actuator.

8. A sampling apparatus according to claim 7 wherein the gripper mechanism includes movable gripper elements and the at least one magnet of the sample probe adaptor (18) is provided on the distal end of at least one of the gripper elements.

## Patentansprüche

1. Eine Probenahmevorrichtung zur sorptiven Probenahme, beinhaltend:
ein Probengefäß (2) zum Fassen einer Flüssigkeit, die einer Probenahme unterzogen werden soll;
eine Probensonde (10), die einen Sondenteilabschnitt aufweist, der konfiguriert ist, um in das Probengefäß (2) eingeführt zu werden, wobei der Sondenteilabschnitt ein Sorptionsmaterial umfasst, das eingerichtet ist, um Analyten aus dem Probengefäß (2) zu gewinnen; und
einen Aktuator, der einen Probensondenadapter (18) beinhaltet, wobei der Aktuator konfiguriert ist, um sich über den Probensondenadapter (18) unabhängig mit dem Probengefäß (2) und der Probensonde (10) zu verbinden und diese zu manipulieren;
wobei die Probensonde und das Probengefäß (2) über den Probensondenadapter (18) lösbar mit dem Aktuator verbindbar sind, sodass der Aktuator in der Lage ist, sich unabhängig voneinander automatisch mit der Probensonde (10) und dem Probengefäß (2) zu verbinden und sich von diesen zu lösen oder sich über den Probensondenadapter (18) gleichzeitig mit der Probensonde (10) und dem Probengefäß (2) zu verbinden, um die Probensonde (10) und das Probengefäß (2) zusammen zu manipulieren, wenn die Probensonde (10) in dem Probengefäß (2) aufgenommen wird.

2. Probenahmevorrichtung gemäß Anspruch 1, wobei der Aktuator ein dreiachsiger Roboterarm ist.

3. Probenahmevorrichtung gemäß Anspruch 1 oder 2, wobei der Aktuator einen trennbaren Verbinder umfasst und die Probensonde (10) einen Verbinderabschnitt beinhaltet, der geformt ist, um von dem trennbaren Verbinder lösbar gehalten zu werden.

4. Probenahmevorrichtung gemäß einem der vorhergehenden Ansprüche, wobei der Probensondenadapter (18) einen ersten Verbinder, der zur trennbaren Verbindung mit dem Aktuator konfiguriert ist, und einen zweiten Verbinder, der konfiguriert ist, um sich trennbar mit dem Probengefäß (2) zu verbinden, wenn der Probensondenadapter (18) mit dem Aktuator verbunden ist, um dem Aktuator zu ermöglichen, sich sowohl mit der Probensonde (10) als auch dem Probengefäß (2) zu verbinden und diese zu manipulieren, aufweist.

5. Probenahmevorrichtung gemäß Anspruch 4, wobei das Probengefäß (2) eine Kappe umfasst, die ein metallisches Element umfasst, und der zweite Verbinder des Probensondenadapters (18) mindestens einen Magneten beinhaltet, der eingerichtet ist, um sich magnetisch an dem metallischen Element der Kappe des Probengefäßes (2) zu befestigen.

6. Probenahmevorrichtung gemäß Anspruch 4 oder 5, wobei der Aktuator einen ersten und einen zweiten vertikalen Aktuator umfasst und der erste Verbinder des Probensondenadapters (18) eingerichtet ist, um sich mit dem ersten vertikalen Aktuator zu verbinden.

7. Probenahmevorrichtung gemäß Anspruch 6, wobei der Probensondenadapter (18) einen Greifermechanismus umfasst, der konfiguriert ist, um die Probensonde (10) zu greifen, um eine trennbare Verbindung zwischen dem Aktuator und der Probensonde (10) bereitzustellen, wobei der Greifermechanismus ein Verbindungselement umfasst, das konfiguriert ist, um sich mit dem zweiten vertikalen Aktuator zu verbinden, um dem Greifermechanismus zu ermöglichen, von dem zweiten vertikalen Aktuator betätigt zu werden.

8. Probenahmevorrichtung gemäß Anspruch 7, wobei der Greifermechanismus bewegliche Greiferelemente umfasst und der mindestens eine Magnet des Probensondenadapters (18) an dem distalen Ende von mindestens einem der Greiferelemente bereitgestellt ist.

## Revendications

1. Un appareil d'échantillonnage pour échantillonnage par sorption comprenant :
un récipient pour échantillons (2) pour contenir un liquide à échantillonner ;
une sonde à échantillons (10) ayant une section de sonde configurée pour être insérée dans le récipient pour échantillons (2), la section de sonde incluant un matériau sorbant conçu pour acquérir des analytes à partir du récipient pour échantillons (2) ; et
un actionneur comprenant un adaptateur de sonde à échantillons (18), l'actionneur étant configuré pour se raccorder et manipuler indépendamment le récipient pour échantillons (2) et la sonde à échantillons (10) par l'intermédiaire de l'adaptateur de sonde à échantillons (18) ;
dans lequel la sonde à échantillons et le récipient pour échantillons (2) peuvent être raccordés de manière détachable à l'actionneur par l'intermédiaire de l'adaptateur de sonde à échantillons (18) de sorte que l'actionneur est apte à se raccorder et se détacher automatiquement de la sonde à échantillons (10) et du récipient pour échantillons (2) indépendamment l'un de l'autre, ou à se raccorder simultanément à la sonde à échantillons (10) et au récipient pour échantillons (2) par l'intermédiaire de l'adaptateur de sonde à échantillons (18) pour manipuler la sonde à échantillons (10) et le récipient pour échantillons (2) conjointement lorsque la sonde à échantillons (10) est reçue à l'intérieur du récipient pour échantillons (2).

2. Un appareil d'échantillonnage selon la revendication 1 dans lequel l'actionneur est un bras robotisé à trois axes.

3. Un appareil d'échantillonnage selon la revendication 1 ou la revendication 2 dans lequel l'actionneur inclut un raccord libérable et la sonde à échantillons (10) comprend une portion de raccord qui est conformée pour être maintenue de manière détachable par le raccord libérable.

4. Un appareil d'échantillonnage selon n'importe quelle revendication précédente dans lequel l'adaptateur de sonde à échantillons (18) a un premier raccord configuré pour un raccordement libérable à l'actionneur et un deuxième raccord configuré pour se raccorder de manière libérable au récipient pour échantillons (2) lorsque l'adaptateur de sonde à échantillons (18) est raccordé à l'actionneur afin de permettre à l'actionneur de se raccorder et de manipuler tant la sonde à échantillons (10) que le récipient pour échantillons (2).

5. Un appareil d'échantillonnage selon la revendication 4 dans lequel le récipient pour échantillons (2) inclut un capuchon incluant un élément métallique et le deuxième raccord de l'adaptateur de sonde à échantillons (18) comprend au moins un aimant conçu pour se fixer magnétiquement à l'élément métallique du capuchon du récipient pour échantillons (2).

6. Un appareil d'échantillonnage selon la revendication 4 ou la revendication 5 dans lequel l'actionneur inclut des premier et deuxième actionneurs verticaux et le premier raccord de l'adaptateur de sonde à échantillons (18) est conçu pour se raccorder au premier actionneur vertical.

7. Un appareil d'échantillonnage selon la revendication 6 dans lequel l'adaptateur de sonde à échantillons (18) inclut un mécanisme préhenseur configuré pour saisir la sonde à échantillons (10) afin de fournir un raccordement libérable entre l'actionneur et la sonde à échantillons (10), le mécanisme préhenseur incluant un élément de raccordement configuré pour se raccorder au deuxième actionneur vertical afin de permettre au mécanisme préhenseur d'être mis en fonctionnement par le deuxième actionneur vertical.

8. Un appareil d'échantillonnage selon la revendication 7 dans lequel le mécanisme préhenseur inclut des éléments préhenseurs mobiles et l'au moins un aimant de l'adaptateur de sonde à échantillons (18) est prévu sur l'extrémité distale d'au moins un des éléments préhenseurs.
